# EUROPEAN PATENT SPECIFICATION

(11) **EP 2 496 359 B1**
(45) Date of publication and mention of the grant of the patent: **05.07.2017**
(21) Application number: 10778827.5
(22) Date of filing: 04.11.2010
(51) Int. Cl.: B05B 1/18

(54) **OUTLET FOR A WASHING INSTALLATION**
ABFLUSS FÜR EINE WASCHANLAGE
DISPOSITIF DE SORTIE POUR INSTALLATION DE TOILETTE OU DE NETTOYAGE

(30) Priority: 06.11.2009 US 258633 P
(43) Date of publication of application: 12.09.2012
(73) Proprietor: Gjosa SA, 2503 Biel/Bienne (CH)
(72) Inventor: VAUCHER, Vincent, 2605 Sonceboz-Sombeval (CH); TSCHANTRÉ, Alfred, CH-3097 Liebefeld (CH); KLOPFENSTEIN, André, 2520 La Neuveville (CH); WIDMER, Heinz, CH-2563 Ipsach (CH); MOULIN, Blaise, F-30700 La Capelle-et-Masmolène (FR); HIRNIAK, Andrew, CH-8006 Zürich (CH); SANTOS, Sérgio Miguel Vale, P-4470-597 Moreira-Maia (PT); CORTE REAL, José Diogo Domingues dos Santos, P-3800-009 Aveiro (PT)
(74) Representative: Frei Patent Attorneys
(86) International application number: PCT/CH2010/000277
(87) International publication number: WO 2011/054121

(56) References cited:
- AU-A1- 2008 202 160
- US-A- 1 569 448
- US-A- 2 044 445
- US-A- 2 493 840
- US-A- 2 744 738
- US-A- 4 403 739
- US-A1- 1 084 359
- US-B1- 6 886 640

## Description

### FIELD OF THE INVENTION

The invention relates to an outlet for a washing installation as used in the field of domestic plumbing installations, and as described in the preamble of the independent claims.

### BACKGROUND OF THE INVENTION

WO 2007/062536 A1 discloses a washing device such as a shower head or water tap designed to operate at an elevated pressure and with a reduced flow rate (as compared to conventional showers). Whereas said patent application discloses basic principles for water saving operation of washing device while maintaining a pleasant wetting and washing experience, certain aspects may still be optimised in order to provide for improved spray geometry, adaptability according to user preferences, efficient manufacturing and maintenance.

US 4426040 discloses an aerating shower head in which the water is sprayed from an orificed nozzle plate arranged transversally to the flow of water. The width of the shower pattern is adjustable by adjusting the position of the nozzle plate along the axis of an outlet passageway of the shower head. The longer the passageway, within limits, the more concentrated the shower pattern is.

US 2 493 840 shows a shower head with rotatable impeller. A cup-shaped member and a nozzle are adjustable relative to a valve.

AU 2008 202 160 A1 shows a shower head with circular stream of water adjustable outer sleeve. The purpose is to provide a water saving shower head areating the water.

US 2 744 738 shows colliding jets in an inverted cup , flow guide with corrugated iron sheets and small passageways or cells in parallel with the direction of water flow. After colliding, the water flows through a flow guide having a multiplicity of small passageways.

US 4 403 739 shows a device for areating water in washing applications: Two plates with a ring of holes each can be rotated relative to one another. The water, according to the position of the plates, either passes through or is "pulverized" in narrow passages creating a multitude of colliding jets. It then passes through a mixing chamber with openings for ambient air, and then through a net.

US 1569 448 shows a fuel injection nozzle. Impacting fuel jets form a flat fuel spray in a cavity whose shape conforms to this flat shape

US 1 084 359 shows a nozzle for oil distributors. Intersecting streams of oil inside a bell-shaped spray shaper.

US 2005087631 discloses a liquid fan jet nozzle for water jet cutting, having a housing with a central passage having an inlet and an outlet. A subnozzle is arranged in the central passage and has two round orifices arranged along converging axes so that round liquid jets exiting the round orifices collide at a distance from the orifices and form a fan-shaped jet.

US7219849 shows a liquid impingement nozzle insert. The inner shape of the nozzle is substantially conical reducing turbulence and dead zones within the nozzle, thereby reducing build-up and clogging.

US7581687 discloses an irrigation sprinkler for projecting a low volume, fluid spray to a drip irrigation zone with a spray nozzle having selectably different fluid sprays. Rotation of a control knob permits the alignment of any one of the plurality of deflectors to be in fluid communication with a nozzle port.

JP2006026623 discloses a cartridge accommodating an additive being detachably mounted on a shower head. The additive is sucked out of the cartridge, without the main flow of shower water passing through the cartridge. JP2000135174 shows a similar cartridge.

### SUMMARY OF THE INVENTION

The following terms shall be used: An outlet comprises one or more atomisers. An atomiser comprises, for example, a nozzle set with two or more nozzles for creating impinging jets of water. As opposed to sprayers ordinarily used in showers, an atomiser generates a flow of a mixture of air and microscopic water droplets rather than macroscopic drops. An outlet can be a part of a tap, or can be a shower head attached to a handle, or a shower head fixedly installed at the end of a pipe or sunk in a wall. An outlet thus is a unit that can be transported, handled and installed as a single unit, in contrast to a shower installation: A shower installation may comprise more than one shower heads, arranged, for example, at the top of and in side walls of a shower cabin, with additional plumbing providing the shower heads with pressurised water.

It is an object of the invention to create an outlet for a washing installation, in particular as part of a domestic plumbing installation or in a portable shower or hand washing unit of the type mentioned initially, which realises the improvements mentioned above.

These objects are achieved by an outlet for a washing installation according to the independent claims, preferably as applied to a washing device as disclosed in WO 2007/062536 A1.

More particular, such an outlet according to the claims is preferably applied to a washing device with one or more atomisers designed for operating at a reduced flow, that is,
- a flow of less than 8 l/min or 6 l/min or 4 l/min or 2 l/min per atomiser (in particular, per nozzle set) for an outlet in a shower; and
- a flow of less than 2 l/min or 1 l/min or 0.5 l/min per atomiser (in particular, per nozzle set) for an outlet in a tap.

The outlet is preferably also designed to operate, in combination with such a reduced flow rate, at an elevated water pressure, that is, a pressure in the range of 5 bar to 40 bar, in particular from 10 bar to 25 bar, and more particular, from 15 to 20 bar.

### Adjustable spray shaping mechanism

According to embodiments, an outlet for a washing installation is provided, in particular as part of a domestic plumbing installation or in a portable shower or hand washing unit which an atomised spray of water can be configured or adjusted according to user preferences.

Such an outlet for a washing installation comprises a shower head or a water tap, the outlet comprising at least one atomiser for generating an initial spray of atomised water or a water-based mixture, wherein the initial spray flows through and is guided by an inner wall of an inner spray shaper and an inner wall of a outer spray shaper, the outer spray shaper being movable with respect to the inner spray shaper along a common axis of the inner spray shaper and the outer spray shaper.

That is, both the inner spray shaper and the outer spray shaper surround the initial spray, and the inner walls are inside walls of a cavity or of a through hole. The common axis is typically a longitudinal axis of the inner spray shaper and the outer spray shaper.

This makes it possible to adapt the length of the combined inner walls to shape the initial spray of atomised water. As opposed to an arrangement in which a single outlet passageway is moved with respect to the nozzles, an embodiment provides for two separate passageways, i.e. the inner and the outer spray shaper. The inner spray shaper remains fixed in relation to the nozzles and provides a first spray shaping function, for which the relative position to the nozzles may not be changed. The outer spray shaper is movable in relation to the nozzles and the inner spray shaper and provides for a second spray shaping function.

The first spray shaping function provides, preferably, for a homogenization of the spray along its circumference. For example, the spray would initially not be homogeneous, as seen in a cross section perpendicular to the main longitudinal axis of the spray (or simply the spraying direction or spray axis), exhibiting a disc-like shape caused by the atomisation. The first spray shaping function achieves a more homogeneous distribution over the cross section, such as an almost homogeneous circular distribution, independent of the angle along the circumference of the cross section. Thus, the first spray shaping function is designed to compensate for asymmetries in spray shape introduced by the atomisation part of the outlet. This function is preferably not adjustable. For example, a disc-like flow of water is transformed to a roughly pipe-like flow.

The second spray shaping function, in contrast, is designed to be adjustable and to adapt the width of the spray, that is, the diameter of the spray (as seen in a cross section perpendicular to the spraying direction) to a user's preferences. The adaptation of the second spray shaping function is thus decoupled from the first spray shaping function.

In an embodiment, at the location where the inner wall of the inner spray shaper meets the inner wall of the outer spray shaper, the inner wall of the inner spray shaper runs at an angle of less than 45° to the inner wall of the outer spray shaper.

That is, for smaller angles tending towards 0°, the inner wall of the inner spray shaper will be at least approximately tangential to the inner wall of the outer spray shaper. This provides for a non-disruptive transition between the two inner walls, preventing or minimising turbulence (disrupting the airflow carrying the spray) and the collecting of drops of water at the transition, thus further contributing to a smooth spraying.

In a further embodiment, the position of the outer spray shaper with respect to the inner spray shaper along the common axis is adjustable by rotating an adjustment sleeve around said common axis, preferably around an angle between 90° and 120°.

In a further embodiment, the movement of the outer spray shaper with respect to the inner spray shaper is effected by a cam and follower or a screw mechanism moving the outer spray shaper along the common axis when the adjustment sleeve is rotated.

The outer spray shaper turns with the adjustment sleeve, resulting in a screwing action against a fixed part of the support body or outlet body of the shower head.

Alternately, the outer spray shaper moves only in a translatory movement along the common axis of the outer spray shaper and the adjustment sleeve when the adjustment sleeve is rotated.

The angle of rotation of the adjustment sleeve is preferably in the range of 90° to 140°, and in particular at least approximately 120°, corresponding to a translatory movement of the outer spray shaper of 5 mm to 10 mm, preferably of 7 mm.

In an embodiment, the adjustment sleeve is joined to the shower head by means of a snap fit connection that holds the adjustment sleeve in the direction of the common axis but allows the rotation of the adjustment sleeve around the common axis.

In a further embodiment, the outer spray shaper is spring-loaded with respect to the adjustment sleeve.

For example, the outlet comprises a spring pushing the outer spray shaper relative to the adjustment sleeve, resulting in a pre-tensioning of the outer spray shaper against the cam and follower or screw mechanism.

In a further embodiment, a mechanism for moving the outer spray shaper relative to the inner spray shaper comprises a cam and follower or a screw mechanism defining discrete steps at which the outer spray shaper snaps into a predetermined position.

In a further embodiment, a mechanism for moving the outer spray shaper relative to the inner spray shaper comprises
- a screw surface on the outer spray shaper and a co-operating surface on a reference body, and/or
- a screw surface on the reference body and a co-operating surface on the outer spray shaper,
wherein the screw surface is stepped, defining discrete steps at which the outer spray shaper snaps into a predetermined position.

In an embodiment, the co-operating surface is a cam sliding along the screw surface. In another embodiment, the co-operating surface is a screw surface, too, complementing the shape of the screw surface mentioned first. In that case there is a first screw surface and a second (counter) screw surface, both screw surfaces optionally comprising steps.

In a further embodiment, a first screw surface, or a co-operating surface, against which the outer spray shaper moves (preferably slides) and thereby defines the position of the outer spray shaper, is integrally formed as part of an outlet body which supports the atomiser and the adjustment sleeve.

In a further embodiment, an outer spray shaper, at the end at which an outer spray leaves the shower head comprises a circumferential thin edge constituting an (air) flow break-away edge, with an inner wall and an outer wall of the outer spray shaper tapering towards each other and meeting at the flow break-away edge.

In other words, seen in a longitudinal cross section, the wall of the outer spray shaper tapers towards the circumferential edge. For example, the inner wall remains cylindrical, and the outer wall tapers inward towards the edge. Due to manufacturing limitations, the thin edge cannot be a mathematically perfect sharp edge, but may be a rounded or flattened edge region, with the inner and the outer wall coming within a distance of less that one or two or three tenths of a millimetre to one another before their transition into the edge region. The circumferential edge constitutes an flow break away edge.

This reduces or even eliminates turbulence at the exit of the outer spray, improving the geometry of the liquid spray. Furthermore, a less sharp edge would cause droplets to collect at the edge, in the lee of the spray, and to be blown away sporadically by the spray of air and atomised liquid which may be uncomfortable to a user.

In a further embodiment, an outer spray shaper through which an outer spray leaves the shower head comprises an end surface substantially orthogonal to the main axis of the spray, the end surface defining, seen from its inner circumference to its outer circumference, the following circumferential features:
- an flow break-away edge at which the end surface meets an inner wall of the outer spray shaper,
- an annular recess beginning at the flow break-away edge and extending outwards until it meets
- an annular edge region which extends in the axial direction of the outer spray shaper at least as far as the flow break-away edge.

The annular edge region protects the air flow break-away edge from mechanical damage.

In a further embodiment, an inner spray shaper defines a cavity in which the initial spray is generated comprises air openings through which air may enter the cavity and join the initial spray generated by the atomiser.

**A method, according to an embodiment, for operating an outlet** for a washing installation, the washing installation comprising a shower head or a water tap, the outlet comprising an atomiser for atomising water, comprises the steps of:
- generating an initial spray of atomised water or a water-based mixture,
- guding the initial spray, as it flows through an inner spray shaper and an outer spray shaper, by an inner wall of the inner spray shaper and an inner wall the outer spray shaper,
- shaping the shape of the initial spray by moving the outer spray shaper with respect to the inner spray shaper along a common axis of the inner spray shaper and the outer spray shaper.

### Coupling

According to embodiments, an outlet for a washing installation is provided, in particular as part of a domestic plumbing installation or in a portable shower or hand washing unit which an element for generating an atomised spray of liquid is easily replaceable.

Such an outlet for a domestic plumbing installation comprises a shower head or a water tap, the outlet comprising at least one atomiser for generating a spray of atomised water or of a water-based mixture, the outlet further comprising
▪ an outlet body, comprising a water feeding conduit and an outlet opening;
▪ a cartridge, comprising a cartridge inlet and an atomising water outlet;
▪ the outlet body holding the cartridge;
▪ the cartridge being arranged to spray the atomised water through the outlet opening in the outlet body;
▪ the cartridge inlet being arranged to be supplied with water by the water feeding conduit;
▪ the cartridge being insertable as one piece into the outlet body.

Unless the cartridge is glued or welded into the outlet body, it is also removable as one piece from the outlet body, making it easy to replace. In a further embodiment, the cartridge is insertable into and optionally also removable from the outlet body at a side of the outlet body opposed to the side of the outlet opening.

In a further embodiment, the outlet comprises a locking cap holding the cartridge in the outlet body, the locking cap preferably connecting to the outlet body via a bayonet joint or a screw joint.

In a further embodiment, at a bend in the flow of the liquid from the feeding conduit to the atomiser, a diversion element is arranged to guide the liquid in a first direction towards the atomiser, the diversion element protruding into a prechamber supplied with liquid from the feeding conduit, with an inlet into the prechamber being located relative to the prechamber such that the liquid, in order to pass the diversion element, first has to flow in a direction opposite to the first direction. The inlet to the prechamber is either the cartridge inlet (where the cartridge comprises the prechamber) or the outlet of the feeding conduit into the prechamber (where the prechamber is defined by the shower head in combination with the cartridge).

In a further embodiment, the outlet body comprises a prechamber supplied with water by the feeding conduit and arranged between the cartridge and the locking cap, with sealing elements arranged between the outlet body and the cartridge and between the outlet body and the locking cap in order to seal the prechamber against an elevated water pressure in the prechamber. The sealing elements preferably are O-rings arranged at the outer periphery of the locking cap or of the cartridge.

In a further embodiment, the locking cap is joined to the outlet body by a screw, and wherein the threads of the screw are self-locking under pressure from the prechamber. Self-locking can be achieved, for example, by flanks at opposite sides of the screw being wedged against one another when the locking screw cap is under pressure from the prechamber. Preferably, the threads are asymmetrical, making them easier to manufacture.

In a further embodiment, the cartridge inlet is removably connected to the water feeding conduit.

In a further embodiment, the outlet comprises a removable cover cap covering access to the locking cap, the cover cap optionally comprising a securing element which, when the cover cap is mounted on the outlet body, engages the locking cap and thereby prevents the locking cap from loosening. For example, the cover cap stops the locking cap from turning and thereby loosening a screw or bayonet joint.

In a further embodiment, wherein the cartridge is held in a receptacle, which preferably is shaped integrally, that is, as a single piece, with the outlet body, an inner surface of the receptacle with the feeding conduit and an outer surface of the cartridge with the cartridge inlet being of corresponding shape and being tapered, causing upon insertion of the cartridge into the receptacle, the cartridge inlet to be pressed against the feeding conduit, with optionally a gasket or an O-Ring sealing the connection between the feeding conduit and the cartridge inlet.

This makes it possible to seal the coupling between the feeding conduit and the cartridge inlet such that it remains watertight under the relatively high pressures under which the outlet is designed to operate. The receptacle or cartridge seat is, for example, moulded as part of the outlet body which supports the other elements of the outlet, such as the adjustment sleeve, cover cap, feeding conduit, locking cap, etc, as well.

In a further embodiment, the force at the coupling between the feeding conduit and the cartridge inlet is at least approximately normal to a direction of insertion of the cartridge into the outlet body (which typically corresponds to the longitudinal axis of the cartridge and to the direction of the holding force effected by the locking cap), and preferably at an angle of less than 20° to a normal to this direction of insertion.

On the other hand, at the side of the cartridge opposed to the cartridge inlet, the side wall lies preferably at least approximately parallel to the longitudinal axis of the cartridge, thereby causing forces between the cartridge and the outlet body in the region where the cartridge inlet opposes the feeding conduit (required for sealing) to have a negligible vector component in the direction of insertion of the cartridge, and therefore also a causing a negligible force on the locking cap.

In a further embodiment, a coupling between the feeding conduit and the cartridge inlet is effected by concentric conduits, one of the conduits being of a larger diameter than the other and being slipped over the other.

In a further embodiment, the feeding conduit points in a direction at least approximately parallel to the insertion direction of the cartridge, and the coupling between the feeding conduit and the cartridge inlet is effected by pushing the cartridge into the receptacle in the insertion direction, and thereby pushing the smaller of the two conduits into the larger one.

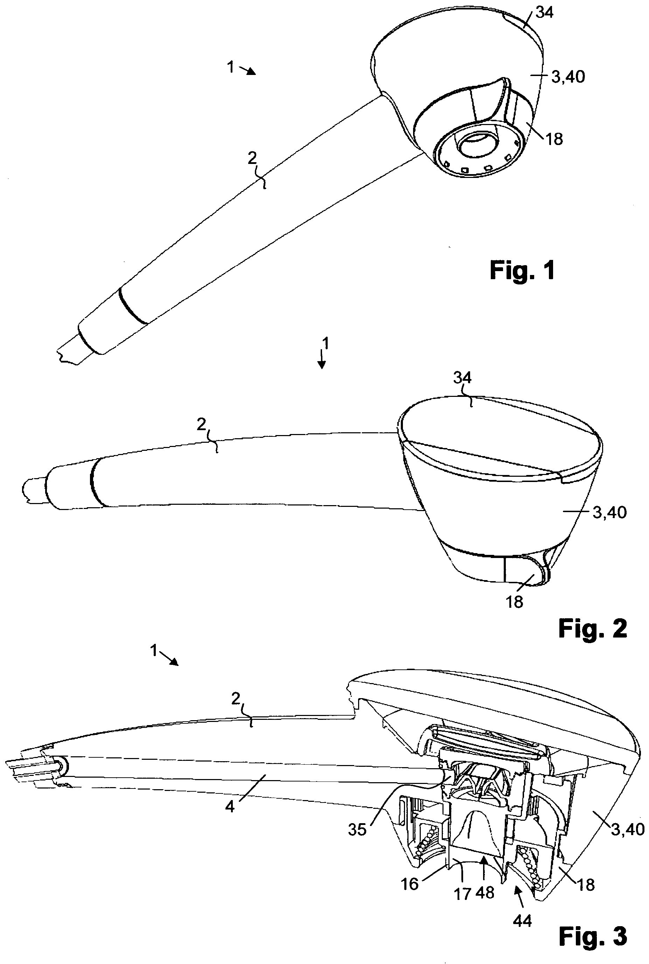

The insertion direction can be along the direction of the feeding conduit and, roughly, of the handle as in the embodiment of **Figs. 1-12****,** or along the direction of the spray axis, with the feeding conduit being bent, at its end, to point in along this direction, or at an intermediate angle. Thus, for example, with the insertion direction being in the direction of the spray axis, the feeding conduit points in the same direction as the spray shaper, that is, in the longitudinal direction of the cartridge, to that the locking cap holding the cartridge presses the cartridge against the end of the feeding conduit. In an alternative embodiment, the feeding conduit is the conduit with the larger diameter and is pushed over a connector extending outwards from the cartridge.

In an embodiment, the sealing of the coupling between the feeding conduit 4 (or the handle or a part of the outlet body in which the feeding conduit is shaped) and the cartridge is effected by an O-ring placed around the coupling and being compressed when the locking cap, or another element holding the cartridge in place, is closed.

In an embodiment, the coupling between the feeding conduit and the cartridge inlet is self-sealing when under pressure from a fluid in the feeding conduit and cartridge inlet. Self-sealing can be effected with an inner tube (e.g. the feeding conduit) being of a deformable material such as a polymer and being forced against an outer tube (e.g. the cartridge inlet) by the pressurised fluid, sealing the joint between the two tubes.

In a further embodiment, the feeding conduit is integrally formed as a conduit inside a handle of a shower head. In another embodiment, the feeding conduit is a separate pipe, that is, a part separate from the handle but arranged inside the handle. This allows to design the feeding conduit, which must be resistant to the high operating pressure, separately from the handle, which must comply with aesthetic requirements and support the shower head. Furthermore, having separate parts provides an additional level of safety in case the feeding conduit should fail under high pressure.

In an embodiment, such a cartridge that is insertable and optionally also removable as one piece from the outlet body is designed as an integrated spraying cartridge and/or with an 8-spray-shaper and/or with an obstruction element as described in the following text.

### Cartridge

According to embodiments, a unit is provided for generating a spray of an atomised liquid, in particular in a domestic plumbing installation or in a portable shower or hand washing unit, which makes the installation easy and efficiently to maintain and repair.

This object is achieved by an integrated spraying cartridge 8 for generating a spray of an atomised liquid, comprising
▪ an atomiser comprising a nozzle set with two or more nozzles arranged to generate impinging jets of liquid for atomising the liquid and generating the spray;
▪ a cartridge inlet for feeding the liquid into the cartridge;
▪ a spray shaper, the spray shaper being a cavity through which the spray of atomised liquid flows and is guided by an inner wall of the spray shaper;
the cartridge being fabricated in one piece or being fabricated from separate parts that are inseparably molded or welded or glued together.

The term "inseparably" means: "not separable and re-assemblable" or "not separable without destroying all or parts of the cartridge". Fabrication "in one piece" can be realised, for example, by a 3D printing process.

In a further embodiment, the cartridge is designed to withstand a liquid pressure of at least 20 bar or 30 bar.

In a further embodiment, a cartridge body supporting the other elements of the cartridge is composed of a plastic material.

Thus, the cartridge body is the main structural element constituting the cartridge, and the other elements (e.g. filter, nozzles or nozzle insert), are held supported by the cartridge body. The cartridge body may be composed of multiple, originally separate parts that are glued or welded together. Some parts of the cartridge body, in particular parts that are not under pressure by the liquid, such as an outer part of the spray shaper, may be joined to the remainder of the cartridge body by snap connections.

In a further embodiment, the cartridge comprises a micro-filter arranged to filter the liquid flowing from the cartridge inlet or from the feeding conduit to the nozzles.

Preferably a micro-filter is arranged at the feed of the fluid or is arranged at another location of the fluid path, in order to prevent the nozzles from becoming blocked.

The filter is preferably provided for letting pass only particles with a size of less than 150 micrometers, in particular less than 50 micrometers, from the water or the liquid. Wires of a wire-based filter mesh (or bars of a filter made from a perforated sheet) preferably have a diameter (width) of less than 100 micrometers, preferably around 50-80 micrometers and in particular 60-70 micrometers.

The filter is preferably arranged in the path of water flowing to the atomiser such that a bend in the water conduit from a handle to the atomiser occurs before the filter.

In a further embodiment, one of more cavities supplying the liquid to the nozzles are shaped symmetrically, with the type of symmetry defined by the number and arrangement of the nozzles, and in which preferably the cartridge inlet is also arranged according to this symmetry.

In a further embodiment, the cartridge comprises two nozzles arranged in mirror symmetry, wherein one of more cavities supplying the liquid to the nozzles are shaped symmetrically relative to the same mirror plane, and with preferably the cartridge inlet also being symmetric relative to this mirror plane.

With the mirror plane going through the point at which the impinging jets meet, bisecting the angle between the jets. In other words, the nozzles are arranged, as seen in a projection onto a plane perpendicular to the spraying direction, symmetrically to the left and right of a line along a longitudinal axis of the flow of liquid through the cartridge inlet.

In a further embodiment, the cartridge comprises three or more nozzles arranged in rotational symmetry, wherein one of more cavities supplying the liquid to the nozzles are shaped symmetrically relative to the same axis of rotation, and with preferably the cartridge inlet also being symmetric relative to this axis of rotation.

In a further embodiment, at a bend in the flow of the liquid from the cartridge inlet to the atomiser, a diversion element (for example, a pipe socket) is arranged to guide the liquid in a first direction towards the atomiser, the diversion element protruding into a prechamber supplied with liquid by the cartridge inlet, the cartridge inlet located relative to the prechamber such that the liquid, in order to pass the diversion element, first has to flow in a direction opposite to the first direction.

Here, "flowing in a direction opposite to the first direction" means that one component of the vector of the flow direction is in a direction opposite to the first direction.

In a further embodiment, the cartridge inlet is oriented such that the direction of flow of the liquid through the cartridge inlet lies at an angle between 60° and 120°, and preferably of 90°, to the spraying direction.

In a further embodiment, the cartridge comprises a nozzle insert comprising two or more nozzles and being of a material different from that of the cartridge body. The nozzle inserts are inserted into or glued into or welded into or molded into the cartridge body.

In a further embodiment, the cartridge comprises two or more nozzle inserts, each of which comprises one nozzle and is of a material different from that of the cartridge body. Here too, the nozzle inserts are inserted into or glued into or welded into or moulded into the cartridge body.

In a further embodiment, the outlets of the nozzles are arranged in a recess in the inner spray shaper, that is, behind the surface or inner wall of the inner spray shaper.

In an embodiment, the integrated spraying cartridge as described here is removably connectable to an outlet for a washing installation, as described previously.

For example, the cartridge can be used in a shower head (hand held or installed fixedly in a shower wall or by means of a fixed pipe) carrying a single cartridge or multiple cartridges.

### Spray-shaper

One object of the invention is to provide an outlet for generating a spray of atomised liquid, in particular as part of a domestic plumbing installation or in a portable shower or hand washing unit which provides for a comfortable washing experience.

This object is achieved by an **outlet** for generating a spray of atomised liquid according to claim 1.

In other words: where the intersection of an inner surface of the spray shaper with a plane that lies perpendicular to the spray axis defines an inner shaping profile, and the inner shaping profile, at least for a part of the spray shaper outward of the point of impact, is constricted in the points where the inner shaping profile intersects the plane of symmetry.

Thus, the spray shaper has, as seen in its cross section, the shape of a constricted circle, similar to the shape of the numeral 8. The effect of this is to counteract the asymmetry in the shape of the spray created by the impinging jets: Two impinging jets create a liquid disk in the plane of symmetry, and the atomised liquid tends to be concentrated around this plane. The constriction of the spray shaper reduces or even eliminates this asymmetry. In an embodiment, the constriction is shaped as a ridge or rib oriented along the liquid disk, that is, with the crest of the ridge lying in the plane of the liquid disk. As a result, the ridge splits the liquid coming from the liquid disk and distributes it more evenly, away from the plane of the liquid disk.

In another embodiment, the constricted cross section, is simply an oval cross section, without a pronounced ridge. The constricted part of the oval reflects and diverts liquid from the liquid disk in a similar manner as the ridge. In further embodiments, where more than two nozzles create the impinging jets, the constricted cross section exhibits a corresponding symmetry, such as an approximately square cross section (the middle of the faces of the square are closer to the spray axis than the corners, and take the function of the ridges, or may be provided with ridges).

In all the variants of spray shapers with constricted cross sections, these constrictions are only arranged along an intermediate section of the inner spray shaper, as seen along the spray axis. Towards the outlet of the spray shaper the inner wall tapers outwards, to form a less constricted or non-constricted cross section, according to the desired shape of the spray. Typically, this will be rounded, oval, or at least approximately circular cross section. Thus, the inhomogeneous (e.g. disc or multidisc like) spray is shaped to shape that is relatively homogeneous with regard to the angle around the spray axis. The spray may, however, be inhomogeneous with regard to the radius from the spray axis, thus having an annular distribution when viewed in a plane normal to the spray axis, and, in 3D, a pipe-like shape.

The outlet for generating a spray of atomised liquid, preferably comprising an integrated spraying cartridge as defined above, comprises all the features of claim 4.

In an atomiser with three or more nozzles, preferably arranged symmetrically around the impinging point, such ridges are arranged to lie at locations along the circumference of the inner spray shaper where an excess of liquid flows from the impinging point. Usually, for equal nozzles, these are planes bisecting the angles between the impinging jets (as seen in a plane normal to the spray axis).

The constriction is shown in section planes normal to the spray axis, in Figures (drawn to scale), with in the most constricted section the diameter of the cavity at the constriction being around 60-90%, preferably around 70-80% of the maximum diameter.

In a further embodiment, an inner wall of the spray shaper, in a section through the plane of symmetry, follows a bell-shaped curve.

In a further embodiment, in a section plane normal to the plane of symmetry and comprising the spray axis, the second derivative of the distance of the inner wall from the axis of symmetry does not change its sign.

Preferably, this constriction is only present along (as seen in the spraying direction) part of the spray shaper, further out, where the spray leaves the spray shaper, it may have again a circular or oval cross section instead of the constricted shape. As a result, as seen in a section by the plane of symmetry, the inner wall of the spray shaper exhibits a bell-like curve. In mathematical terms, this means that the second derivative of the distance of the inner wall from the axis of symmetry changes its sign at least once, preferably at least twice.

In a section plane normal to the plane of symmetry and containing the spray axis, the second derivative of the distance of the inner wall from the axis of symmetry does not change its sign. For example, the inner wall has, in this section, an at least approximately parabolic shape.

In a further embodiment, an outlet opening of the cavity of the spray shaper comprises a circular cross-section.

Thus, the outlet opening is round again, i.e. not constricted.

In an embodiment, at an outlet opening of the inner spray shaper, the inner wall of the inner spray shaper tapers towards the outer wall of the inner spray shaper, an angle of less than 45°. In other words, the angle between the inner wall and the enclosing cylinder is less than 45°.

This spray shaping outlet as described above is preferably implemented in an insertable and optionally removable cartridge as described elsewhere in the present application. However, the spray shaping outlet may also be realised independently, without being part of a cartridge.

### Mesh/Grid

According to embodiments, an outlet for generating a spray of atomised liquid is provided, in particular as part of a domestic plumbing installation or in a portable shower or hand washing unit which provides an agreeable washing experience despite the fact that an atomiser is used.

Such an outlet for generating a spray of atomised liquid, preferably comprises an integrated spraying cartridge and/or a spray shaper as defined in the above, the outlet comprising at least one atomiser for generating an initial spray of atomised liquid, the outlet further comprising an obstruction element or obstruction body arranged in at least a central area of the path of the spray for impeding at least a part of the initial spray.

After passing through or around the obstruction element, the spray shall be called "outer spray".

In a further embodiment, the obstruction element is a sieve, or a perforated plate or sheet. The obstruction element can be made of plastic or metal.

In an embodiment, the sieve is typically a mesh of thin wires. In other embodiments the obstruction element or sieve is a solid body, such as a perforated plate or sheet. In embodiments, all of the initial spray passes either through the obstruction element or is deflected by other parts of the spray shaper, such that no part of the initial spray exits the outlet opening of the outlet body unhindered or undisturbed.

In a further embodiment, fibres or wires forming a mesh of the sieve are spaced with an aperture of less than 200 micrometers, preferably less than 150 micrometers, and the wires preferably have a diameter of less than 100 micrometers, preferably around 50-80 micrometers and in particular 60-70 micrometers. A perforated plate or sheet preferably has a grid with holes with an aperture of less than 200 micrometers, preferably less than 150 micrometers, separated by bars having a width as the diameter of the wires described above. Such a plate or sheet can be manufactured by photo etching (photo-chemical milling) or photo sintering.

In a further embodiment, the obstruction element covers the outlet opening of an integrated spraying cartridge, and the obstruction element is, preferably, inseparably molded or welded or glued to the cartridge.

The obstruction element is preferably arranged at end or outlet opening of the cartridge, that is, at end of the inner wall of the inner spray shaper. Consequently, the obstruction element forms part of the disposable nozzle set unit or cartridge.

In a further embodiment, the obstruction element affects only a part of the initial spray, leaving a passage around the obstruction element open.

In a further embodiment, wherein the obstruction element, such as a sieve or perforated plate or sheet, covers the outlet opening of at least two atomisers, the at least two atomisers preferably being at least two integrated spraying cartridges.

In a further embodiment, two or more such obstruction elements are arranged in a series after one another, forming two or more layers, so that the spray flows through the two or more obstruction elements in sequence.

This obstruction element within the spray shaping region or at the outlet of the spray shaping region, as described above, is preferably implemented in an insertable and optionally removable cartridge as described elsewhere in the present application. However, such an obstruction element may also be realised independently, without being part of a cartridge.

Both the obstruction element and the (constricted) spray shaper serve to smooth the outer spray, making it agreeable to a human user. This is especially advantageous in combination, in a shower or tap application, with a high pressure and high velocity atomisation arrangement such as with impinging jets: such an atomisation may result in combinations of droplet size and droplet speed that is perceived on the human skin and according to preference, either as stimulating (massage effect) or as undesired. The sieve helps to eliminate fast, large droplets, thus creating a smoother and more agreeable shower or washing experience. The spray shaper homogenises the distribution of water around the spray axis, also resulting in an improved experience.

### General

In all embodiments, in operation of the atomiser, the droplets created by the atomiser preferably have a median diameter of less than 200 micrometers. Thus, about 50% of the produced droplets thereby preferably have a diameter of below 200 micrometers.

In all embodiments, the outlet preferably comprises at least one atomiser wherein the one or more atomiser is designed for operating at a reduced flow, that is,
- a flow of less than 8 l/min or 6 l/min or 4 l/min or 2 l/min per atomiser in a shower; and
- a flow of less than 2 l/min or 1 l/min or 0.5 l/min per atomiser in a tap.

In all embodiments, the outlet preferably comprises at least one atomiser wherein the one or more atomiser is designed for operating at an elevated water pressure, that is, a pressure in the range of 5 bar to 40 bar, in particular from 10 bar to 25 bar, and more particular, from 15 to 20 bar. This means that the outlet is preferably installed in cooperation with a pump or other source of pressurized water for providing the water at said elevated pressure and with at least the specified flow rate. For example, the outlet is designed to provide, per atomiser, a nominal flow of 2 l/min, given a nominal pressure between 15 bar and 25 bar, preferably of 20 bar.

In all embodiments, the at least one atomiser preferably comprises a nozzle set arranged to generate two or more impinging jets of water for atomising the water.

According to a further embodiment, the cartridge inlet is arranged in the direction the axis of the cartridge, the cartridge being insertable into the outlet body along a direction perpendicular to the spraying direction. The cartridge is then held, e.g. clamped or screwed against the feeding conduit, sealing the connection between the feeding conduit and the cartridge inlet.

In all embodiments described, the preferred application lies in the context of a domestic plumbing installation or in a portable shower or hand washing unit, that is, in the context of washing human (or animal) body parts. In this context the benefits become most apparent, that is,
- the smooth feeling on the user's skin, as a result of "spray smoothing" measures such as shaping of the spray and the elimination of droplets with a particular combination of velocity and mass; and
- the perception of an generous flow of water, although the actual flow is much lower than in conventional outlets.

However, the application of the invention is not limited to the abovementioned context, but may be extended to other contexts in which the combination of a low flow and strong wetting effect is desired.

In settings where a larger throughput of water is acceptable, but the pleasant efficient washing experience is desired, two or more outlets can be used, or an outlet with two or more atomisers, in particular two or more spraying cartridges, or atomisers and cartridges with two or more sets of nozzles with impinging jets, or a combination of such multiple outlets, atomisers or nozzle sets.

It is also understood that the wherever the present application mentions water, this is meant to include mixtures of water with other fluids or soluble components, such as soap, other cleaning agents, disinfectants etc. Such water-based mixtures, and also liquids and mixtures not comprising water can also be conveyed through and sprayed by the inventive outlet.

Further preferred embodiments are evident from the dependent patent claims.

### BRIEF DESCRIPTION OF THE DRAWINGS

The subject matter of the invention will be explained in more detail in the following text with reference to preferred exemplary embodiments which are illustrated in the attached drawings, in which:
- Figures 1-3: show a shower head;
- Figures 4-7: show a nozzle insert or cartridge;
- Figure 8-12: show details of a shower head with a cartridge;
- Figure 13: shows a shower head in another embodiment;
- Figure 14: shows a shower head installed in a wall;
- Figure 15: shows an exploded view of a further embodiment;
- Figures 16 -19: show details of components of this embodiment;
- Figure 20: shows a cross section through the head of this embodiment;
- Figures 21-22: show sectional views of the cartridge of this embodiment, the two views being at a right angle to one another; and
- Figure 23: shows an exploded view of the cartridge of this embodiment.

The reference symbols used in the drawings, and their meanings, are listed in summary form in the list of reference symbols. In principle, identical or functionally identical parts are provided with the same reference symbols in the figures.

### DETAILED DESCRIPTION

**Figs. 1-3** show a shower head 3 in two perspective views and one cut view. The shower head 3 comprises an outlet body 40 attached to a handle 2, the handle 2 comprising a feeding conduit 4 for supplying pressurised water to an atomiser. An adjustment sleeve 17 is rotatable around a spray axis, allowing for user control of spray geometry. A removable cover cap 34 allows access to and exchanging of a nozzle insert or cartridge 8.

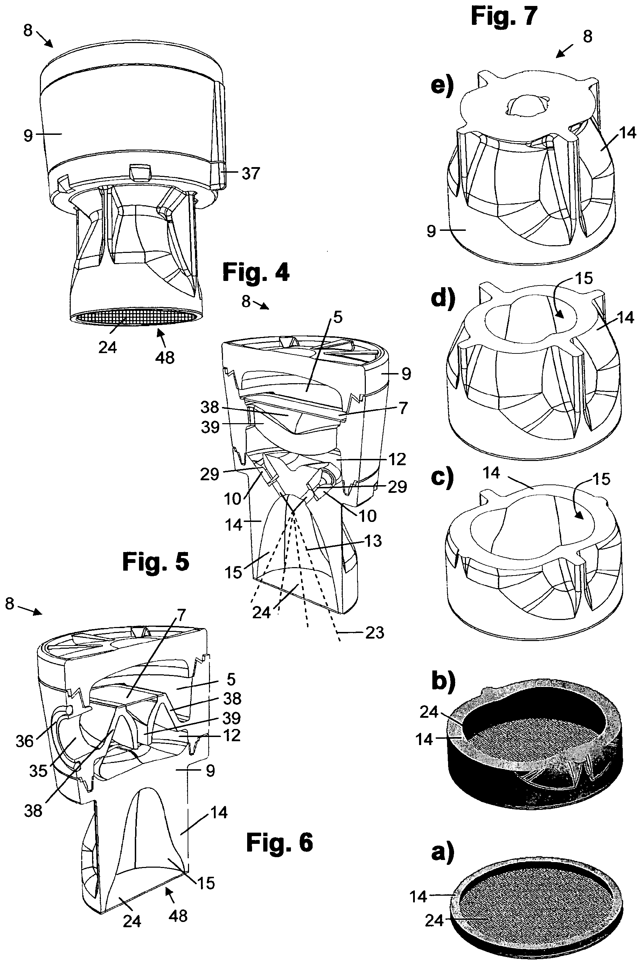

**Figs. 4-7** show said nozzle insert or cartridge 8 removed from the outlet body 40. **Fig. 4** is a perspective view of the complete cartridge 8, **Fig. 5** and **Fig. 6** show cut views with the cut in **Fig. 5** being normal to a plane of symmetry and passing through the spray axis, and the cut in **Fig. 6** being in the plane of symmetry. The cartridge 8 is an integrated unit for atomising and spraying a liquid, such as water or a water-based mixture, by means of impinging jets of the liquid under high pressure.

The cartridge 8 is assembled from separate parts, which are joined together in a preferably non-separable manner, for example by welding and/or molding and/or glueing and/or snap connections. The main nozzle set body 9 or cartridge body is preferably made of a plastic material. The cartridge 8 is designed to withstand the high pressures required by the atomising principle, plus a margin of safety.

The cartridge 8 is provided for the pressurised liquid to enter the cartridge 8 by a cartridge inlet 35, a gasket or O-ring 36 being provided to seal a connection between the cartridge inlet 35 and the feeding conduit 4.

The atomised spray is created by impinging jets of liquid which flow from nozzles 29. The nozzles 29 are defined by or made in nozzle inserts 10 arranged in the cartridge body 9. In other embodiments of the invention, the nozzles 29 are shaped in the cartridge body 9 itself, without separate nozzle inserts. The spray created is an initial spray 13, inside the cartridge 8, which passes through a obstruction element 24, in particular a sieve or mesh or perforated plate, and forms an outer spray 23 which leaves the cartridge 8 at an outlet opening 48.

The initial spray 13 is shaped by an inner spray shaper 14, that is, by the shape of an inner wall 15 of the inner spray shaper 14. **Figs. 7a-7e** show horizontal cross sections (normal to the spray axis) at different heights of the inner spray shaper 14, illustrating the shape of its inner wall 15. The inner wall 15 exhibits at its extreme ends an at least approximately circular cross section, and at in intermediate region a cross section in the shape of a constricted circle or "8-shape", as in **Figs. 7b-7d****.** In this intermediate region, the constricted part, i.e. the "waist" of the 8-shape has a diameter that is around 60-90%, preferably around 70-80% of the diameter at the longest axis of the same cross section.

In the passage from the cartridge inlet 35 to the nozzles 29, a micro-filter 7 is provided for preventing the nozzles 29 from getting blocked. Furthermore, a diversion element 38 is arranged to divert or redirect the flow of liquid such that a symmetric flow and pressure distribution is created, in order to effect a symmetric liquid supply and operation of the nozzles 29. The diversion element 38 and the remainder of the volume between the cartridge inlet 35 and the nozzles 29 are therefore shaped mirror-symmetrical, the plane of symmetry being defined by the plane bisecting the angle between the nozzle directions, i.e. the angle between the intersecting jets of liquid (The bisecting plane is orthogonal to the nozzle plane, i.e. the plane in which the spraying directions of the nozzles lie). For the same reason, the cartridge inlet 35 is located at said plane of symmetry.

From the cartridge inlet 35, the liquid flows first into a prechamber 5, then around a diversion element 38 and through a diversion passage 39 into a intermediate chamber 12, from which it enters the nozzles 29. The diversion element 38 forces the liquid first to flow in a direction opposite to the direction to the nozzles 29, and also around the diversion element 38, evening out the flow. The diversion passage 39 through which the liquid passes from the prechamber 5 into the intermediate chamber 12, is elongated along the nozzle plane, and less wide in a direction normal to the nozzle plane, allowing for a better flow of liquid to the nozzles 29 (as opposed to a circular passage). The diversion element 38 redirects the flow, steadies the flow and directs the redirected flow in a evenly stabilized manner to the nozzles 29.

In **Fig. 4****,** a orienting element 37 at the periphery of the cartridge 8 is visible, which defines the orientation of the cartridge 8 when it is inserted in a cartridge seat 32 in the shower head 3 or, more particular in the outlet body 40.

In a preferred embodiment of the invention the cartridge 8 comprises a cover piece, a piece comprising the diversion element 38, a piece comprising the nozzle insert(s) 10 and the spray shaper 14 and the mesh, all made of a polymer (plastic) and welded together. Exemplary dimensions of the cartridge 8 are the following: height: 31 mm, of which 14 mm are for the inner spray shaper and the nozzles, and 17 mm are for the diversion element and the cover piece. The nozzles stand at a 90° angle to one another. The impinging point lies at least 4 mm, e.g. at 4.7 mm, from the outlet or outflow of each nozzle. Increasing this distance reduces the noise created by the impinging jets. For this reason, the outlets of the nozzles are preferably arranged each in a preferably separate recess in the inner spray shaper, that is, behind the surface of the inner spray shaper 14 and not at the surface of the inner spray shaper. Consequently, after exiting the nozzle, a jet of water flies freely along the recess, then exits the inner wall 15 of the inner spray shaper 14 and then flies inside the free volume of the cavity of the inner spray shaper 14 until it hits the other jet or jets. Arranging the nozzle outlets at the inner end of a recess in the inner wall 15 increases the length of the freely flying jet (as compared to a nozzle outlet at the level of the inner wall 15).

The nozzles are made of ceramic or polymer or metal and are preferably inserted, that is driven in without glue in the cartridge body. Alternatively, they are arranged in the cartridge by insertion moulding. The diameter of the nozzles ranges from 0.4 mm to 0.8 mm and preferably 0.55 mm and 0.65 mm and is preferably 0.58 mm or 0.61 mm. The noise of the impinging jets can be reduced by reducing the nozzle diameter. In order to maintain a desired flow rate of water, the number of impinging jets can be increased accordingly. There may be several jets impinging on the same point, or two or more subsets of jets impinging at different points in the same cavity.

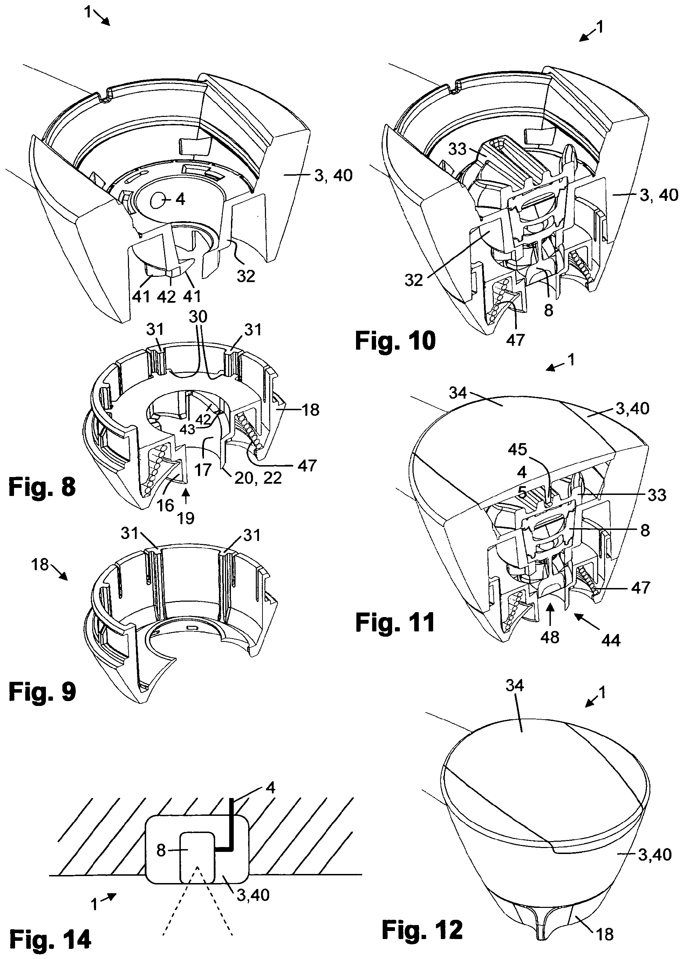

**Figures 8-12** show details of an outlet body 40 of a shower head 3 designed to operate with an insertable and optionally removable cartridge 8, with **Figs. 8-11** being cut views in order to better show inner details of the components. **Fig. 8** shows an exploded view of the outlet body 40 separated from the adjustment sleeve 18. In the outlet body 40, the cartridge seat 32, integrally shaped with the outlet body 40, is visible. Also shaped integrally with the outlet body 40 is a first screw surface 41 comprising steps 43. The first screw surface 41 spirals around an adjustment axis, which preferably coincides with the spray axis and the axis of symmetry of the cartridge 8. Inside the adjustment sleeve 18, and slidable in the direction of the adjustment axis, is an outer spray shaper 16. Outer guiding elements 31 shaped in the adjustment sleeve 18 and inner guiding elements 30 shaped on the outer spray shaper 16 define a joint between the outer spray shaper 16 and the adjustment sleeve 18, which allows the outer spray shaper 16 to slide along the adjustment axis but forces the outer spray shaper 16 to turn with the adjustment sleeve 18 around the adjustment axis. **Fig. 9** shows the adjustment sleeve 18 in isolation. A pre-loading spring 47 pushes the outer spray shaper 16, along the axis of adjustment, away from the adjustment sleeve 18 and against the first screw surface 41. The outer spray shaper 16 comprises a second screw surface 42, also with steps 43, complementing the shape of the first screw surface 41. Turning the adjustment sleeve 18 and with it the outer spray shaper 16, the second screw surface 42 slides along the first screw surface 41, against the force of the spring 47, and positions the outer spray shaper 16 along the adjustment axis. The steps 43 define discrete intermediate positions at which the outer spray shaper 16 snaps into position and a larger turning force must be exterted on the adjustment sleeve 18 in order to continue its movement.

**Fig. 10** shows the outlet body 40 with the cartridge 8 inserted in the cartridge seat 32 and locked into position by a locking cap 33. The locking cap 33 joined to the outlet body 40 by means of a bayonet joint, integrally formed openings in the outlet body 40, arranged around the cartridge seat 32, for receiving hooks of the locking cap 33 being visible in **Fig. 8****.**

**Fig. 11** shows, in addition, a cover cap 34 snapped on to the outlet body 40, covering the locking cap 33. In a preferred embodiment of the invention, a securing element 45 extending from the cover cap 34, reaches into a correspondingly shaped part of the locking cap 33, preventing movement (in particular rotation) and therefore loosening of the locking cap 33. **Fig. 12** shows a similar view, but without the cut.

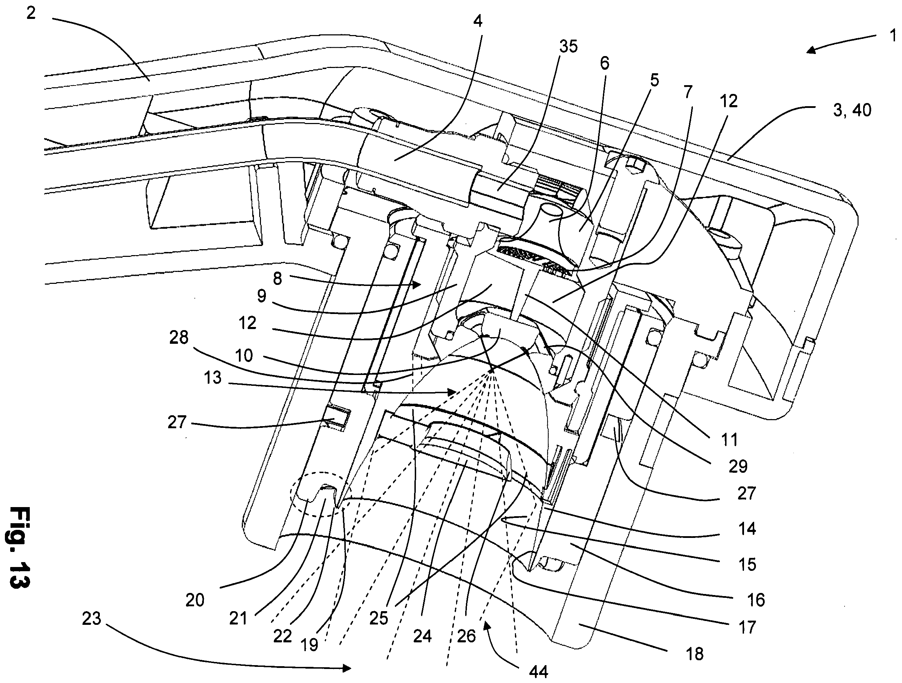

**Fig. 13** shows a shower head in another preferred embodiment of the invention. The overall function of the components is the same as in the previous embodiment, but the details differ as follows (Each of these alternative details may be implemented, alone or in combination, in an outlet body 40 according to the embodiments of **Figs. 1-12**):
▪ The feeding conduit 4 is connected to the cartridge inlet 35 by a cinch-like connector, i.e. by concentric conduits, one of the conduits being of a larger diameter than the other and being slipped over the other. Such a connector may of course also be implemented with the cartridge 8 according to the embodiment of **Figs. 4-7****.**
▪ The cartridge 8 comprises, as diversion element, a pipe socket 6 around which and into which the liquid flows from the prechamber 5 to the intermediate chamber 12. This rotational symmetry of the pipe socket 6 is well suited for a nozzle arrangement with three or more nozzles arranged to point at the same impinging point.
▪ The filter 7 is mechanically supported by a filter support 11 extending from the filter surface, in the general direction of flow, to an opposing side of the intermediate chamber 12.
▪ Two (or more) nozzles 29 are shaped in a single nozzle insert 10.
▪ An upper part of the inner spray shaper 14 is constituted of the cartridge 8 or of the nozzle insert 10. A lower part of the inner spray shaper 14 is not part of the cartridge 8.

The cartridge 8 can be opened for replacement of the filter 7.
▪ The inner spray shaper 14 comprises air openings 28 through which air can be sucked, from behind, into the spray.
▪ An obstruction element 24, for example a sieve or perforated plate, is arranged in the central area of the spray (i.e. around the spray axis), surrounded by open passages 25. This softens the spray in the central area. Preferable, a separating wall 26 between the obstruction element and the passages 25 is adapted to the shape of the inner wall, that is, shaped to conform with the shape of the inner wall 15 of the inner spray shaper 14, e.g. by running at least approximately parallel to the inner wall 15. Preferably, most or essentially all the water particles of the initial spray 13 passing through the passage 25 hit an inner wall 17 of a part of the shower head 3 before leaving the shower head 3.
▪ The outer spray shaper 16 slides along the inner spray shaper 14, and a screw (with a screw thread 27) or a cam and follower mechanism (with the cam surface being a screw surface) is arranged between the outer spray shaper 16 and the adjustment sleeve 18. Turning the adjustment sleeve 18 slides the outer spray shaper 16 along cooperating guiding elements between the outer spray shaper 16 and the outlet body 40 or the cartridge 8.
▪ The outer spray shaper 16 also comprises, at an end region or end surface 19 where the spray leaves the outer spray shaper 16, a sharp (air) flow break-away edge 22. This edge affects the flow of air and of the spray water flowing with the air. Surrounding the flow break-away edge 22 is an annular edge region 20 separated from the flow break-away edge 22 by an annular recess 21. The edge region 20 serves as a mechanical protection for the air flow break-away edge 22.

**Fig. 14** shows a shower head 3 installed with its outlet body 40 sunk in a wall or ceiling. Here, as in the previous embodiments, a single outlet body 40 may comprise also two or more atomisers, in particular two or more cartridges 8 as described.

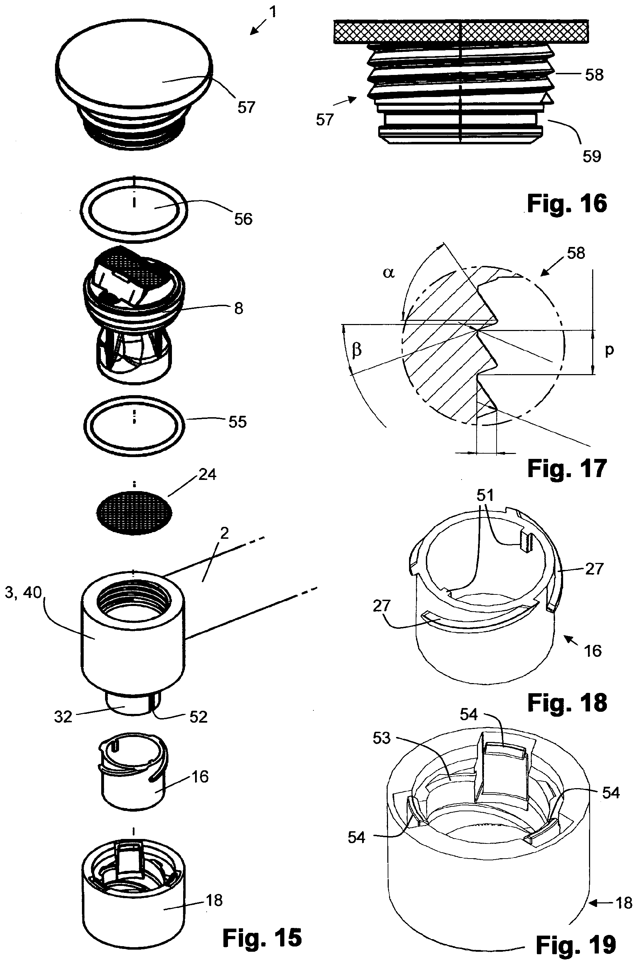

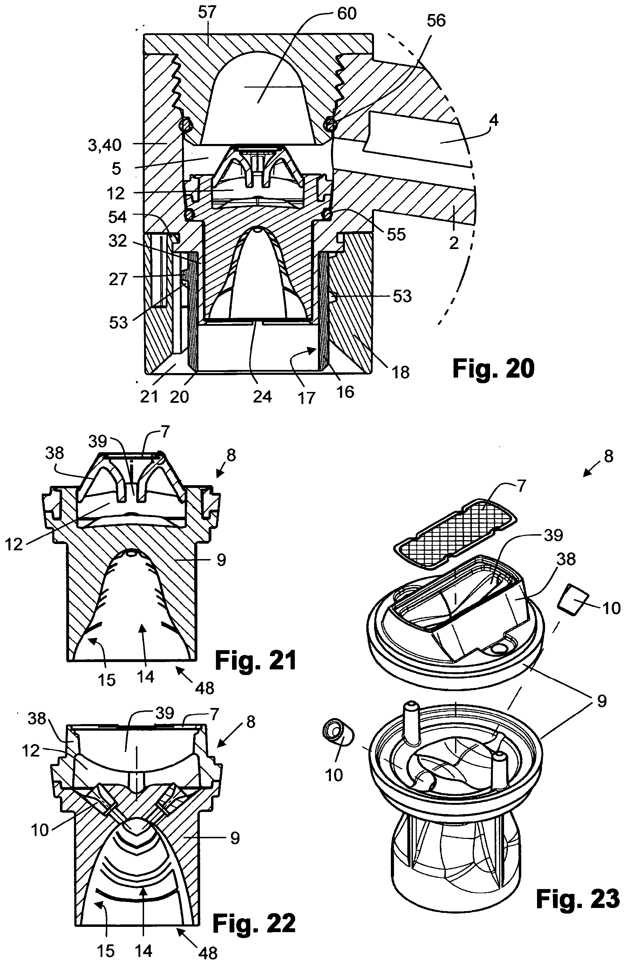

**Figs. 15-23** show a further preferred embodiment of the invention, with an exploded view in **Fig. 15** and a sectional view in **Fig. 20****.** The cartridge 8, made of separate top and bottom parts welded together, using two welding posts, is inserted into the shower head 3, holding down the obstruction body or mesh or sieve 24 inside the cartridge seat 32. If the obstruction body is a separate part, then it is made to maintain its shape without additional support, e.g. by being manufactured as a perforated plate, or as a mesh held by a circumferential ring. In an variant of the embodiment, the obstruction body 24 is part of the cartridge 8. The cartridge 8 is held in the shower head 3 by a screw cap 57. The screw cap 57 may be called a locking cap since it has a locking function. The cartridge 8 - in contrast to the previously described embodiments - does not comprise the prechamber 5, and weld seams of the cartridge are not exposed to the water pressure. Rather, the prechamber 5 is formed in the shower head 3, and the water enters the cartridge 8 through the filter 7 (welded into the top part, or replaceably inserted with a snap fit) and the diversion passage 39 arranged in the diversion element 38. Consequently, in this embodiment the diversion passage 39 is considered to be the cartridge inlet. In order to seal the prechamber 5 against the high water pressure, a cartridge O-ring 55 is arranged between the cartridge 8 and the inside of the shower head 3 on one side of the prechamber 5, and a cap O-ring 56 is arranged between the screw cap 57 and the shower head 3 on the other side.

Water flows through the feeding conduit 4 into the prechamber 5, around the diversion element 38 and through a cavity 60 shaped on the inside of the screw cap 57 into the cartridge 8. **Figs. 21-23** show the cartridge 8 in more detail. The arrangement and function of the further elements of the cartridge 8 affecting the flow and spraying of water, such as the intermediate chamber 12, the nozzle inserts 10 and the inner spray shaper 14 with the inner wall 15 and the constricted and bell-shaped cross sections may be the same as in the previous embodiments.

When the screw cap 57 is screwed into the shower head 3, a lower portion of the screw cap 57 pushes a section of the diversion element 38 into the cartridge seat 32 of the shower head 3. In another embodiment, the screw cap 57 does not contact the cartridge 8, and the cartridge 8 is pushed fully or almost fully against its seat during assembly. The cartridge 8 in turn holds down the obstruction body, in this case, a sieve 24 against an inwardly protruding element at the end of the cartridge seat 32. When the prechamber 5 is filled with water under pressure, the pressure pushes the cartridge 8 in an axial direction into its final position against an axial seat on the outlet body beside the O-ring 55. The cartridge O-ring 55 is compressed by the cartridge 8 in the radial direction.

**Figs. 16** and **17** show the screw cap 57 in more detail. It comprises a groove 59 for receiving the cap O-ring 56, and an asymmetrical thread 58. The cap O-ring 56 is compressed by the screw cap 57 in radial direction. In the asymmetric thread 58, the opposing flanks are inclined at different angles. The flanks that are under pressure when the prechamber 5 is under pressure have an angle α of between 46° and 66° and preferably between 51° and 61° and in particular 56° relative to the normal to the screw axis. The opposite flanks have an angle β of between 10° and 30° and preferably between 15° and 25° and in particular 20° relative to the normal to the screw axis. The pitch p of the screw lies between 2 and 3 mm and preferably is 2.3 mm, with a diameter of ca. 23 mm. The relatively large angle α causes the screw cap 57 to be self-locking when under pressure, even when the material of the shower head 3 and screw cap 57 is plastic and is immersed in soapy water. On the other hand, when not under pressure, the screw cap 57 can be manually unscrewed. The self-locking effect is caused by the flanks on opposite sides of the screw being wedged against one another in the radial direction when the screw cap 57 under pressure is pushed in its axial direction.

**Figs. 18** and **19** show the outer spray shaper 16 and adjustment sleeve 18 of this embodiment in more detail: The outer spray shaper 16 is cylindrical and comprises, on the inner side, ribs 51 that are arranged to slide in slots 52 of the cartridge seat 32 (see **Fig. 15**), constraining the outer spray shaper 16 to move in an axial direction of the cylindrical cartridge seat 32 and outer spray shaper 16. On the outside of the outer spray shaper 16, a set of screw threads 27 is arranged to engage corresponding grooves 53 of the adjustment sleeve 18. Rotating the adjustment sleeve 18 around its axis thus allows to adjust the position of the outer spray shaper 16 along its axis. In a variant of the present embodiment, the screw thread 27 and groove 53 are shaped to comprise steps, as in the embodiment of **Figs. 8-12****,** allowing for distinct stops at predetermined positions. The adjustment sleeve 18 further comprises flexible hooks 54 that snap into a corresponding groove of the cartridge seat 32, holding the adjustment sleeve 18 in the axial direction but allowing it to rotate.

In an alternative variant of the present embodiment, the ribs 51 are arranged at the outer side of the outer spray shaper 16 (with corresponding slots on the adjustment sleeve 18), and the screw threads 27 are arranged on the inside of the outer spray shaper 16 (with corresponding grooves on the cartridge seat 32). This will cause the outer spray shaper 16 to turn along with the adjustment sleeve 18 when its axial position is adjusted.

The adjustment sleeve 18 further comprises, at its outer end, an inward taper, as seen in **Fig. 20****.** This causes the presence of a circular recess 21 around the outer edge 20 of the outer spray shaper 16, even when the outer spray shaper 16 is completely retracted into the shower head 3. The recess 21 has the same function as in the embodiment of Fig. 13, that is, it allows for an improved air flow along the air flow break-away edge 22, which in the present embodiment is identical to the edge 20.

While the invention has been described in present preferred embodiments of the invention, it is distinctly understood that the invention is not limited thereto, but may be otherwise variously embodied and practised within the scope of the claims.

**LIST OF DESIGNATIONS**

| | | | |
|---|---|---|---|
| 1 | outlet | 30 | inner guiding element |
| 2 | handle | 31 | outer guiding element |
| 3 | shower head | 32 | cartridge seat, receptacle |
| 4 | feeding conduit | 33 | locking cap |
| 5 | prechamber | 34 | cover cap |
| 6 | pipe socket | 35 | cartridge inlet |
| 7 | filter | 36 | O-Ring |
| 8 | nozzle set unit, cartridge | 37 | orienting element |
| 9 | nozzle set body | 38 | diversion element |
| 10 | nozzle insert | 39 | diversion passage |
| 11 | filter support | 40 | outlet body |
| 12 | intermediate chamber | 41 | first screw surface |
| 13 | initial spray | 42 | second screw surface |
| 14 | inner spray shaper | 43 | step |
| 15 | inner wall | 44 | outlet opening of outlet body |
| 16 | outer spray shaper | 45 | securing element |
| 17 | inner wall | 47 | spring |
| 18 | adjustment sleeve | 48 | outlet opening of cartridge |
| 19 | end surface | 51 | rib, protrusion |
| 20 | edge | 52 | slot |
| 21 | recess | 53 | groove |
| 22 | air flow break-away edge | 54 | hook |
| 23 | outer spray | 55 | cartridge O-ring |
| 24 | obstruction element | 56 | cap O-ring |
| 25 | passage | 57 | screw cap |
| 26 | separating wall | 58 | thread |
| 27 | screw thread | 59 | groove |
| 28 | air opening | 60 | cavity |
| 29 | nozzle | | |

## Claims

1. **An outlet** (1) for generating a spray of atomised liquid, the outlet (1) comprising at least one atomiser (10) for generating a spray (13) of atomised liquid, the outlet (1) further comprising
▪ a single pair of nozzles (29) for creating impinging jets of water, thereby atomising the liquid and creating the spray (13) of liquid; where the nozzles (29) are arranged in mirror-symmetric fashion with regard to one another wherein
- the pair of nozzles define a plane of symmetry and a spray axis, wherein the plane of symmetry bisects the angle between the jets and the spray axis is defined by the projection of the direction of the impinging jets onto the plane of symmetry;
- the outlet (1) comprises a spray shaper (14) for shaping the spray of atomized liquid, the spray shaper being a cavity arranged around the area where the jets of water collide after exiting the nozzles; and
**characterised in that**,
- an inner surface (15) of the spray shaper (14), when viewed in a plane that lies perpendicular to the spray axis, in at least some locations where the spray shaper (14) intersects the plane of symmetry, is closer to the spray axis than in other locations.

2. The outlet (1) according to claim 1, wherein an inner surface (15) of the spray shaper (14) has a constriction being shaped as at least one ridge or rib oriented along the plane of symmetry.

3. The outlet (1) according to one of the claims 1 or 2, wherein an inner surface (15) of the spray shaper (14) has the shape of a constricted circle, similar to the shape of the numeral 8.

4. **An outlet** (1) for generating a spray of atomised liquid, the outlet (1) comprising at least one atomiser (10) for generating a spray (13) of atomised liquid wherein
- a set of nozzles (29) for creating impinging jets of water, thereby atomising the liquid and creating the spray (13) of liquid; where the nozzles (29) are arranged in symmetric fashion with regard to one another;
- the set of nozzles (2) define a spray axis;
- the outlet (1) comprises a spray shaper (14) for shaping the spray of atomized liquid, the spray shaper (14) being a cavity arranged around the area where the jets of water collide; and
**characterised in that**,
- an inner surface (15) of the spray shaper (14) comprises one or more ridges extending into the cavity of the spray shaper (14), with in each case a crest of the ridge lies in a plane in which the atomiser creates an excess of liquid, as compared to other locations along the circumference of the inner spray shaper (14).

5. The outlet (2) according to claim 4, wherein the ridges are arranged to lie at locations bisecting the angles between impinging jets.

6. The outlet (1) according to one of the claims 1 or 5, wherein, in a section through at least one plane comprising the spray axis, the second derivative of the distance of an inner wall of the spray shaper (14), from the axis of symmetry does change its sign at least once, preferably at least twice.

7. The outlet (1) according to one of the claims 1 to 6, wherein an inner wall of the spray shaper (14), in a section through the plane of symmetry, follows a bell-shaped curve.

8. The outlet (1) according to one of the claims 1 to 7, wherein in a section plane normal to the plane of symmetry and comprising the spray axis, the second derivative of the distance of the inner wall from the axis of symmetry does not change its sign.

9. The outlet (1) according to one of the claims 1 to 8, wherein an outlet opening (48) of the cavity of the spray shaper (14) comprises a circular cross-section.

10. The outlet (1) according to one of the claims 1 to 9, wherein, at an outlet opening (48) of the spray shaper (14), the inner wall (15) of the spray shaper (14) tapers towards the outer wall of the spray shaper (14), an angle of less than 45°.

11. The outlet (1) according to one of the claims 1 to 10, the outlet (1) comprising at least one atomiser (10) for generating an initial spray (13) of atomised liquid, the outlet (1) further comprising an obstruction element (24) arranged in at least a central area of the path of the spray (13) for impeding at least a part of the initial spray (13).

12. The outlet (1) according to claim 11, wherein the obstruction element (24) is a sieve or a perforated plate, preferably wherein fibres or wires or bars forming a mesh of the sieve or perforated plate are spaced with an aperture of less than 200 micrometers, preferably less than 150 micrometers, and the wires or bars preferably have a diameter or width of less than 100 micrometers, preferably around 50-80 micrometers and in particular 60-70 micrometers.

13. The outlet (1) according to one of the claims 11 to 12, wherein the nozzles (9) and the spray shaper (14) are part of an integrated spraying cartridge (8) comprising an outlet opening (48), and the obstruction element (24) covers the outlet opening (48) of the integrated spraying cartridge (8), and the obstruction element (24) is, preferably, inseparably molded or welded or glued to the cartridge (8).

14. The outlet (1) according to one of the claims 11 to 13, wherein the obstruction element (24) affects only a part of the initial spray (13), leaving a passage (25) around the obstruction element (24) open.

15. The outlet (1) according to one of the claims 1 to 14, the outlet (1) being part of a washing installation, the washing installation comprising a shower head (3) or a water tap, preferably comprising at least one atomiser wherein the one or more atomiser is designed for operating at an elevated water pressure, that is, a pressure in the range of 5 bar to 40 bar, in particular from 10 bar to 25 bar.

## Patentansprüche

1. Auslass (1) zur Erzeugung eines Sprühstrahls einer zerstäubten Flüssigkeit, wobei der Auslass (1) wenigstens einen Zerstäuber (10) zur Erzeugung eines Sprühstrahls (13) einer zerstäubten Flüssigkeit umfasst, wobei der Auslass (1) ferner
ein einzelnes Paar von Düsen (29) zur Erzeugung von aufeinandertreffenden Wasserstrahlen umfasst, wodurch die Flüssigkeit zerstäubt wird und der Sprühstrahl (13) der Flüssigkeit erzeugt wird; wobei die Düsen (29) in Bezug zueinander auf eine spiegelsymmetrische Weise angeordnet sind, wobei
- das Paar von Düsen eine Symmetrieebene und eine Sprühachse definiert, wobei die Symmetrieebene den Winkel zwischen den Strahlen zweiteilt und die Sprühachse durch die Projektion der Richtung der aufeinandertreffenden Strahlen auf die Symmetrieebene definiert ist;
- der Auslass (1) einen Sprühstrahlformer (14) umfasst, um den Sprühstrahl der zerstäubten Flüssigkeit zu formen, wobei der Sprühstrahlformer ein Hohlraum ist, der um den Bereich, in dem die Wasserstrahlen nach dem Verlassen der Düsen aufeinanderprallen, angeordnet ist; und
**dadurch gekennzeichnet, dass**
- eine in einer senkrecht zu der Sprühstrahlachse liegenden Ebene betrachtete Innenfläche (15) des Sprühstrahlformers (14) an wenigstens einigen Stellen, an denen der Sprühstrahlformer (14) die Symmetrieebene schneidet, näher an der Sprühstrahlachse liegt, als an anderen Stellen.

2. Auslass (1) nach Anspruch 1, wobei eine Innenfläche (15) des Sprühstrahlformers (14) eine Verengung aufweist, die als wenigstens ein Grat oder eine Rippe, der oder die entlang der Symmetrieebene ausgerichtet ist, geformt ist.

3. Auslass (1) nach einem der Ansprüche 1 oder 2, wobei eine Innenfläche (15) des Sprühstrahlformers (14) die einer Form der Ziffer 8 ähnliche Form eines eingeschnürten Kreises aufweist.

4. Auslass (1) zur Erzeugung eines Sprühstrahls einer zerstäubten Flüssigkeit, wobei der Auslass (1) wenigstens einen Zerstäuber (10) zur Erzeugung eines Sprühstrahls (13) einer zerstäubten Flüssigkeit umfasst, wobei
- ein Satz von Düsen (29) zur Erzeugung von aufeinandertreffenden Wasserstrahlen, wodurch die Flüssigkeit zerstäubt wird und der Sprühstrahl (13) der Flüssigkeit erzeugt wird; wobei die Düsen (29) in Bezug zueinander auf eine symmetrische Weise angeordnet sind;
- der Satz von Düsen (2) eine Sprühstrahlachse definiert;
- der Auslass (1) einen Strahlformer (14) umfasst, um den Sprühstrahl der zerstäubten Flüssigkeit zu formen, wobei der Sprühstrahlformer (14) ein Hohlraum ist, der um den Bereich, in dem die Wasserstrahlen aufeinanderprallen, angeordnet ist; und
**dadurch gekennzeichnet, dass**
- eine Innenfläche (15) des Sprühstrahlformers (14) einen oder mehrere Grate umfasst, die sich in den Hohlraum des Sprühstrahlformers (14) erstrecken, wobei in jedem Fall ein Scheitelpunkt des Grats in einer Ebene liegt, in der der Zerstäuber verglichen mit anderen Stellen entlang des Umfangs des inneren Sprühstrahlformers (14) einen Überschuss an Flüssigkeit erzeugt.

5. Auslass (2) nach Anspruch 4, wobei die Grate so angeordnet sind, dass sie an Stellen liegen, die die Winkel zwischen aufeinanderprallenden Strahlen zweiteilen.

6. Auslass (1) nach einem der Ansprüche 1 oder 5, wobei die zweite Ableitung des Abstands einer Innenwand des Sprühstrahlformers (14) von der Symmetrieachse in einem Querschnitt durch wenigstens eine Ebene, die die Sprühachse umfasst, ihr Vorzeichen wenigstens ein Mal und vorzugsweise wenigstens zwei Mal ändert.

7. Auslass (1) nach einem der Ansprüche 1 bis 6, wobei eine Innenwand des Sprühstrahlformers (14) in einem Querschnitt durch die Symmetrieebene einer glockenförmigen Kurve folgt.

8. Auslass (1) nach einem der Ansprüche 1 bis 7, wobei die zweite Ableitung des Abstands der Innenwand von der Symmetrieachse in einer Schnittebene, die normal zu der Symmetrieebene verläuft und die Sprühachse enthält, ihr Vorzeichen nicht ändert.

9. Auslass (1) nach einem der Ansprüche 1 bis 8, wobei eine Auslassöffnung (48) des Hohlraums des Sprühstrahlformers (14) einen runden Querschnitt umfasst.

10. Auslass (1) nach einem der Ansprüche 1 bis 9, wobei sich die Innenwand (15) des Sprühstrahlformers (14) an einer Auslassöffnung (48) des Sprühstrahlformers (14) in einem Winkel von weniger als 45° zu der Außenwand des Sprühstrahlformers (14) verjüngt.

11. Auslass (1) nach einem der Ansprüche 1 bis 10, wobei der Auslass (1) wenigstens einen Zerstäuber (10) zur Erzeugung eines anfänglichen Sprühstrahls (13) der zerstäubten Flüssigkeit umfasst, wobei der Auslass (1) ferner ein Hinderniselement (24) umfasst, das in wenigstens einem zentralen Bereich des Pfads des Sprühstrahls (13) angeordnet ist, um wenigstens einen Teil das anfänglichen Sprühstahls (13) zu behindern.

12. Auslass (1) nach Anspruch 11, wobei das Hinderniselement (24) ein Sieb oder eine perforierte Platte ist, wobei vorzugsweise Fasern oder Drähte oder Stäbe, die ein Netz des Siebes oder der perforierten Platte bilden, mit einer Öffnung von weniger als 200 Mikrometer und vorzugsweise weniger als 150 Mikrometer beabstandet sind, und die Drähte oder Stäbe vorzugsweise einen Durchmesser oder eine Breite von weniger als 100 Mikrometer und vorzugsweise etwa 50 bis 80 Mikrometer und insbesondere 60 bis 70 Mikrometer aufweisen.

13. Auslass (1) nach einem der Ansprüche 11 bis 12, wobei die Düsen (9) und der Sprühstrahlformer (14) Teil einer integrierten Sprühkartusche (8), die eine Auslassöffnung (48) umfasst, sind, und das Hinderniselement (24) die Auslassöffnung (48) der integrierten Sprühkartusche (8) abdeckt, und das Hinderniselement (24) vorzugsweise untrennbar an die Kartusche (8) gegossen oder geschweißt oder geklebt ist.

14. Auslass (1) nach einem der Ansprüche 11 bis 13, wobei das Hinderniselement (24) nur einen Teil des anfänglichen Sprühstrahls (13) beeinflusst und ein Durchgang (25) um das Hinderniselement (24) offen gelassen wird.

15. Auslass (1) nach einem der Ansprüche 1 bis 14, wobei der Auslass (1) ein Teil einer Wascheinrichtung ist, wobei die Wascheinrichtung einen Duschkopf (3) oder einen Wasserhahn umfasst, der vorzugsweise wenigstens einen Zerstäuber umfasst, wobei der eine oder die mehreren Zerstäuber zum Betrieb bei einem erhöhten Wasserdruck, das heißt, einem Druck in dem Bereich von 5 Bar bis 40 Bar und insbesondere 10 Bar bis 25 Bar gestaltet sind.

## Revendications

1. Sortie (1) destinée à produire un brouillard de liquide pulvérisé, la sortie (1) comprenant au moins un pulvérisateur (10) qui produit un brouillard (13) de liquide pulvérisé, la sortie (1) comprenant en outre :
une unique paire d'ajutages (29) qui crée des jets incidents d'eau pour ainsi pulvériser le liquide et former le brouillard (13) de liquide, les ajutages (29) étant agencés à symétrie spéculaire l'un par rapport à l'autre,
la paire d'ajutages définissant un plan de symétrie et un axe de pulvérisation, le plan de symétrie bissectant l'angle entre les jets et l'axe de pulvérisation étant défini par la projection dans la direction des jets incidents sur le plan de symétrie,
la sortie (1) comprenant un façonneur (14) de brouillard qui façonne le brouillard de liquide pulvérisé, le façonneur de brouillard présentant une cavité agencée autour de la zone dans laquelle les jets d'eau entrent en collision après avoir quitté les ajutages,
**caractérisée en ce que**
vue dans un plan perpendiculaire à l'axe de pulvérisation, en au moins certains emplacements auxquels le façonneur (14) de brouillard intersecte le plan de symétrie, une surface intérieure (15) du façonneur (14) de brouillard est plus proche de l'axe de pulvérisation qu'en d'autres emplacements.

2. Sortie (1) selon la revendication 1, dans laquelle la surface intérieure (15) du façonneur (14) de brouillard présente un rétrécissement configuré sous la forme d'au moins une arête ou nervure orientée le long du plan de symétrie.

3. Sortie (1) selon l'une des revendications 1 ou 2, dans laquelle une surface intérieure (15) du façonneur (14) de brouillard présente la forme d'un cercle rétréci semblable à la forme du chiffre 8.

4. Sortie (1) destinée à former un brouillard de liquide pulvérisé, la sortie (1) comprenant au moins un pulvériseur (10) qui produit un brouillard (13) de liquide pulvérisé,
un jeu d'ajutages (29) formant des jets incidents d'eau pour ainsi pulvériser le liquide et former le brouillard (13) de liquide, les ajutages (29) étant agencés symétriquement l'un par rapport à l'autre,
le jeu d'ajutages (2) définissant un axe de pulvérisation,
la sortie (1) comprenant un façonneur (14) de brouillard qui façonne le brouillard de liquide pulvérisé, le façonneur de brouillard étant une cavité agencée autour de la zone dans laquelle les jets d'eau entrent en collision après avoir quitté les ajutages, **caractérisée en ce que**
une surface intérieure (15) du façonneur (14) de brouillard comprend une ou plusieurs arêtes s'étendant dans la cavité du façonneur (14) de brouillard, avec dans chaque cas une crête de l'arête située dans un plan dans lequel le pulvérisateur produit plus de liquide qu'en d'autres emplacements situés sur la circonférence du façonneur intérieur (14) de brouillard.

5. Sortie (1) selon la revendication 4, dans laquelle les arêtes sont agencées de manière à être situées en des emplacements qui bissectent les angles formés entre les jets mutuellement incidents.

6. Sortie (1) selon l'une des revendications 1 ou 5, dans laquelle, dans une coupe qui traverse au moins un plan comprenant l'axe de pulvérisation, la dérivée seconde de la distance entre une paroi intérieure du façonneur (14) de brouillard et l'axe de symétrie change de signe au moins une fois et de préférence au moins deux fois.

7. Sortie (1) selon l'une des revendications 1 à 6, dans laquelle sur une paroi intérieure du façonneur (14) de brouillard, dans une coupe traversant le plan de symétrie, suit une courbe en cloche.

8. Sortie (1) selon l'une des revendications 1 à 7, dans laquelle dans un plan de coupe perpendiculaire au plan de symétrie et comprenant l'axe de pulvérisation, la dérivée seconde de la distance entre la paroi intérieure et l'axe de symétrie ne change pas de signe.

9. Sortie (1) selon l'une des revendications 1 à 8, dans laquelle une ouverture (48) de sortie de la cavité du façonneur (14) de pulvérisation a une section transversale circulaire.

10. Sortie (1) selon l'une des revendications 1 à 9, dans laquelle une ouverture de sortie (48) du façonneur (14) de pulvérisation, la paroi intérieure (15) du façonneur (14) de pulvérisation se rétrécit sous un angle inférieur à 45° en direction de la paroi extérieure du façonneur (14) de pulvérisation.

11. Sortie (1) selon l'une des revendications 1 à 10, dans laquelle la sortie (1) comprend au moins un pulvériseur (10) qui produit un brouillard initial (13) de liquide pulvérisé, la sortie (1) comprenant en outre un élément d'obstruction (24) agencé au moins dans une partie centrale du parcours du brouillard (13), de manière à gêner au moins une partie du brouillard (13) initial.

12. Sortie (1) selon la revendication 11, dans laquelle l'élément d'obstruction (24) est un tamis ou une plaque perforée, et de préférence dans laquelle des fibres ou des fils ou barreaux formant un treillis du tamis ou un arc de plaque perforée sont écartées d'une ouverture inférieure à 200 micromètres et de préférence inférieure à 150 micromètres, les fils ou barreaux présentant de préférence un diamètre ou une largeur inférieure à 100 micromètres, de préférence d'environ 50 à 80 micromètres et en particulier de 60 à 70 micromètres.

13. Sortie (1) selon l'une des revendications 11 à 12, dans laquelle les ajutages (9) et le façonneur (14) de brouillard font partie d'une cartouche intégrée de pulvérisation (8) qui comprend une ouverture de sortie (48), l'élément d'obstruction (24) couvrant l'ouverture de sortie (48) de la cartouche intégrée de pulvérisation (8) et l'élément d'obstruction (24) étant de préférence moulée, soudée ou collée sur la cartouche (8) de manière non libérable.

14. Sortie (1) selon l'une des revendications 11 à 13, dans laquelle l'élément d'obstruction (24) n'agit que sur une partie du brouillard initial (13) en laissant ouvert un passage (25) autour de l'élément d'obstruction (24).

15. Sortie (1) selon l'une des revendications 1 à 14, dans laquelle la sortie (1) fait partie d'une installation de lavage, l'installation de lavage comprenant une tête de douche (3) ou un robinet à eau, et comprenant de préférence au moins un pulvériseur, le ou les pulvériseurs étant conçus de manière à fonctionner à haute pression d'eau, c'est-à-dire une pression comprise dans la plage de 5 bars à 40 bars et en particulier de 10 bars à 25 bars.
